Europäisches Patentamt

(19) European Patent Office

Office européen des brevets

(11) Publication number: **0 313 988 B1**

(12) **EUROPEAN PATENT SPECIFICATION**

(45) Date of publication of patent specification: 09.10.91 Bulletin 91/41

(21) Application number: **88117488.2**

(22) Date of filing: **20.10.88**

(51) Int. Cl.⁵: **G01T 1/29**

(54) **Multi-layer composite for simultaneous tomography.**

(30) Priority: **20.10.87 JP 264400/87**

(43) Date of publication of application: **03.05.89 Bulletin 89/18**

(45) Publication of the grant of the patent: **09.10.91 Bulletin 91/41**

(84) Designated Contracting States: **DE FR NL**

(56) References cited:
**EP-A- 0 112 469**
**WO-A-83/00567**
**FR-A- 2 514 908**

(73) Proprietor: **FUJI PHOTO FILM CO., LTD.**
**210 Nakanuma Minami Ashigara-shi**
**Kanagawa 250-01 (JP)**

(72) Inventor: **Ohmiya, Kenji Fuji Photo Film Co., Ltd.**
**No. 798, Miyanodai Kaisei-machi**
**Ashigara-kami-gun Kanagawa (JP)**
Inventor: **Teraoka, Masanori Fuji Photo Film Co., Ltd.**
**No. 798, Miyanodai Kaisei-machi**
**Ashigara-kami-gun Kanagawa (JP)**

(74) Representative: **Patentanwälte Grünecker, Kinkeldey, Stockmair & Partner**
**Maximilianstrasse 58**
**W-8000 München 22 (DE)**

## Description

## BACKGROUND OF THE INVENTION

### Field of the Invention

The present invention relates to a multi-layer composite employable for simultaneous tomography, and more particularly to a multi-layer composite for simultaneous tomography having a plurality of stimulable phosphor sheets which can, with high reliability, give a radiation image (X-rays image) corresponding to an aimed section without specifically placing a mark for distinguishing the section from other sections on each stimulable phosphor sheet.

### Description of Prior Art

It is well known that a certain phosphor stores a portion of a radiation energy when exposed to a radiation such as X-rays, α-rays, β-rays, γ-rays, electron rays and ultraviolet rays, and the phosphor gives light emission (i.e.. stimulated emission) corresponding to the stored energy when excited with stimulating rays such as visible light. The phosphor having such property is called "stimulable phosphor".

For obtaining a radiation image, a radiation image recording and reproducing method utilizing the stimulable phosphor has been previsously proposed and practically employed, as described in EP-A-0112469, US-A-4258264, US-A-4387428 and US-A-4267473. The method involves the steps of temporarily recording a radiation image information of an object such as a human body in the stimulable phosphor of sheet form (i.e., stimulable phosphor sheet) ; scanning the stimulable phosphor sheet with stimulating rays such as a laser beam to give stimulated emission ; then photoelectrically detecting the emitted light to obtain electric signals ; and reproducing a radiation image of the object as a visible image from the electric signals on an appropriate recording material such as a photosensitive material or a reproducing device such as CRT.

In the above-mentioned method, the radiation image information having been stored and recorded in the stimulable phosphor sheet is converted into electric signals, and the electric signals are subjected to appropriate signal-processing to obtain a visible image, as described above. Thus obtained radiation image is very favorable in accurately studying the radiation image information (i.e., excellent in diagnostic accuracy).

A simultaneous tomography has been conventionally known as one example of radiography (X-ray photography). In the simultaneous tomography, as described e.g. in FR-A-2514908, radiation images corresponding to plural sections of an object can be simultaneously obtained by performing only one radiographic process, so that the tomography is very advantageous in medical diagnosis. For example, there can be obtained plural section images having completely the same locomotion phases in the case of internal organs of locomotion such as heart and lung, and in the case of other organs, there can be obtained a plurality of section images suffering no shear with each other which is caused by motion of an examinee, while such shear is unavoidable in other radiography. Further, the simultaneous tomography is advantageously employable from the viewpoints of reduction of radiation dose applied to a human body and reduction of physical or mental burden on the examinee.

It is known that the aforementioned stimulable phosphor sheet can be employed as a recording medium for the simultaneous tomography. The simultaneous tomography using the stimulable phosphor sheet can be carried out in the similar manner to that in the conventional simultaneous tomography using a number of composites (laminates) of a radiographic film and a radiographic intensifying screen. In more detail, a multi-layer composite for simultaneous tomography having plural stimulable phosphor sheets and an X-ray tube (X-ray source) are placed interposing an object therebetween, and the object is then irradiated with X-rays under moving the composite and/or the X-ray tube to relative to each other under the conditions to satisfy a linear law (wherein the focal point of X-ray tube, a point in the desired cross section and a point on the stimulable phosphor sheet are linearly aligned) and a geometric law (wherein the ratio of the distance between the focal point of the X-ray tube and the desired cross section to the distance between the desired cross section and the stimulable phosphor sheet is constant).

The conventional multi-layer composite for simultaneous tomography employs stimulable phosphor sheets having phosphor layers of different thickness from the viewpoint of enhancing the sensitivity, and those sheets are arranged in such a manner that a sheet having a phosphor layer of larger thickness is located farther from the object. Each of the stimulable phosphor sheets is provided with a mark which indicates the location thereof within the composite (i.e., a mark indicating the section corresponding to the resulting reproduced image) and is made of using a stimulating rays-screening (shielding) material. For this reason, the stimulable phosphor sheet used in the conventional composite ought to be a specifically designed sheet and the use thereof is limited to only the simultaneous tomography.

A radiation image recording and read-out process utilizing tomography and an apparatus for performing the process are shown in US-A-4762999.

As increase of sensitivity of the stimulable phosphor sheet, a composite having plural stimulable phosphor sheets prepared in the same manner and having substantially the same various properties (i.e., standard stimulable phosphor sheet) has been recently employed in the simultaneous tomography. Standardization of the stimulable phosphor sheets employable for the simultaneous tomography is very valuable in that the usage of a commonly designed phosphor sheet can be remarkably broadened and the specifically designed sheet is unnecessary in the tomography.

In the simultaneous tomography, it is necessary to distinguish or clarify the fact which sheet the radiation image has been recorded on (that is, which section of the object the resulting radiation image corresponds to). From WO-A-8300567, it is known to mark an X-ray film by providing X-ray impermeable indicia in the radiation path. In the conventional simultaneous tomography, a method of initially marking each stimulable phosphor sheet of the multi-layer composite using stimulating rays-screening material has been utilized as described above. However, if the method is utilized in the above-described composite using a plurality of standard (i.e. commonly designed) stimulable phosphor sheets, each phosphor sheet is no longer a standard one and such sheet cannot be used widely in various radiography.

## SUMMARY OF THE INVENTION

It is an object of the invention to provide a multi-layer composite for simultaneous tomography which can, with high reliability, give a visible image corresponding to each section of an object without specifically marking each stimulable phosphor sheet per se for distinguishing the sections from each other even in the case of arranging a plurality of equivalent stimulable phosphor sheets in arbitary or optional order.

There is provided by the present invention a multi-layer composite for simultaneous tomography comprising alternating layers of plural stimulable phosphor sheets and plural X-ray transmitting spacers, wherein in the vicinity of the periphery of one surface of each said spacer is provided a distinguishable mark made of X-ray absorbing material which is capable of discriminating the spacers from each other and each said mark is positioned in contact with or close to one of the stimulable phosphor sheets which is to be marked by said mark and adjoins the spacer having the mark.

According to the multi-layer composite for simultaneous tomography of the present invention, visible images precisely corresponding to each section of the object can be obtained. Particularly, even if a plurality of equivalent standard stimulable phosphor sheets employable for various radiography are arranged in an optional order, there can be obtained, with high reliability, visible images precisely corresponding to each section of the object.

## BRIEF DESCRIPTION OF THE DRAWINGS

Fig. 1 is a perspective view showing an example of the multi-layer composite for simultaneous tomography according to the present invention.
Fig. 2 is a perspective view schematically showing conditions of lamination of stimulable phosphor sheets and X-ray transmitting spacers.

## DETAILED DESCRIPTION OF THE INVENTION

The present invention is described in detail hereinafter by referring to the attached drawings.

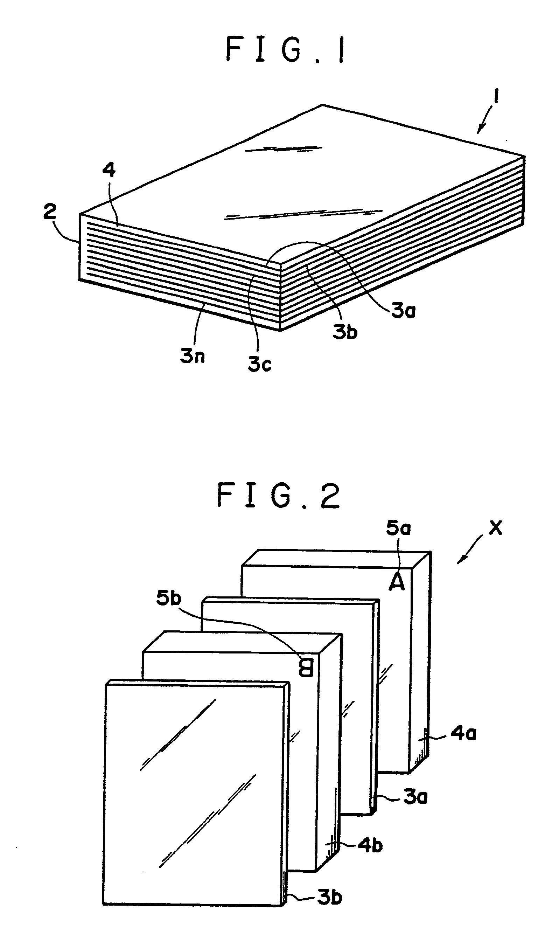

Fig. 1 is a perspective view showing an example of the multi-layer composite for simultaneous tomography of the present invention.

In Fig. 1, a multi-layer composite 1 for simultaneous tomography comprising plural stimulable phosphor sheets 3a, 3b, 3c, ..., 3n and plural X-rays transmitting spacers 4 is encased in a cassette 2. All of the stimulable phosphor sheets are the same as each other, and each stimulable sheet and each spacer are laminated alternately. All of the X-rays transmitting spacers 4 are combined with each other at their end or side portions, and each of the stimulable phosphor sheets 3a, 3b, 3c, ...., 3n is interposed between the spacers.

The stimulable phosphor of the stimulable phosphor sheet, as described hereinbefore, gives stimulated emission when excited with stimulating rays after exposure to a radiation. From the viewpoint of practical use, the stimulable phosphor is desired to give stimulated emission in the wavelength region of 300-500 nm when excited with stimulating rays in the wavelength region of 400-900 nm.

As materials of the X-rays transmitting spacer, there can be mentioned expanded resin boards, sponge sheets made of natural rubbers or synthetic rubbers, plastic sheets, ordinary papers and synthetic papers.

Examples of the expanded resin boards include boards of polystyrene foam, polyethylene foam, polypropylene foam, polyvinyl chloride foam, polyamide foam and cellulose acetate foam.

Examples of the sponge rubbers include polyurethane foam, styrene butadiene foam and natural rubber sponge.

The thickness of the X-rays transmitting spacer is preferably in the range of 1 to 100 mm.

Fig. 2 is a perspective view schematically showing conditions of lamination of the stimulable phosphor sheets and the X-rays transmitting spacers.

In Fig. 2, the stimulable phosphor sheet and the X-rays transmitting spacer are laminated alternately, and they are arranged in such a manner that they are irradiated with a radiation having passed through an object in the direction of the arrow X in the radiographic operation. The X-rays transmitting spacer 4a is provided with a distinguishable mark 5a in one corner on the surface which is brought into contact with the stimulable phosphor sheet 3a. Likewise, the X-rays transmitting spacer 4b is provided with a distinguishable mark 5b in one corner on the surface which is brought into contact with the stimulable phosphor sheet 3b. Thus, each of the X-rays transmitting spacers 4 is provided with a distinguishable mark 5 in one corner on the surface which is positioned in contact with or close to the stimulable phosphor sheet to be distinguished from other sheets, so as to distinguish all the stimulable phosphor sheets 3a, 3b, 3c, ..., 3n encased in the cassette 2 from each other.

The distinguishable mark 5 is made of X-rays absorbing material such as a metal foil (e.g., lead foil) or a paint containing a metal powder, and is fixed to the surface of the X-rays transmitting spacer by adhering with an adhesive or placing the paint. There is no specific limitation with respect to the shape of the distinguishable mark, and any shape can be employed, provided that the stimulable phosphor sheets can be distinguished from each other by their shapes. For example, there can be employed letters, figures, etc. as the mark. The thickness of the distinguishable mark generally is in the range of 50 to 100 μm. The mark is necessarily provided on such a place where the mark does not obstruct the formation of section image of the object, for example, it is provided in one corner of the spacer. Further, the mark may be slightly embedded in the surface of the spacer.

In the multi-layer composite for simultaneous tomography of the present invention, the stimulable phosphor sheets and the X-rays transmitting spacers are laminated as shown in Fig. 2, and the composite is irradiated with a radiation having passed through the object in the direction of the arrow X in the tomographic operation. Hence, the distinguishable mark 5a provided on the X-rays transmitting spacer 4a is recorded on the stimulable phosphor sheet as the area where X-rays energy is not stored. Likewise, the distinguishable mark 5b provided on the X-rays transmitting spacer 4b is recorded on the stimulable phosphor sheet 3b as the area where X-rays energy is not stored. In the simultaneous tomography, only an image of a specific section is clearly recorded on the stimulable phosphor sheet, while images of other sections are blurry thereon, as described hereinbefore. Therefore, on the stimulable phosphor sheet 3b, only the distinguishable mark 5b is clearly recorded but the image of the distinguishable mark 5a appears blurry, although the marks 5a and 5b overlap each other in the direction of the arrow X.

All of the X-rays transmitting spacers are combined with each other at their side portions as shown in Fig. 1, and the relative position of each stimulable phosphor sheet within the composite can be determined. However, it is not necessary that the spacers have such a structure as shown in Fig. 1, and they may be separated from each other and the separate spacers simply may be piled on the stimulable phosphor sheets.

The simultaneous tomographic process using the multi-layer composite of the present invention is performed as follows. The multi-layer composite of the invention, an X-rays tube facing the composite and an object are arranged in such a manner that the object is interposed between the composite and the tube, and the X-rays transmitting spacer 4a (shown in Fig. 2) of the composite is arranged on the side to face the object (that is, in front of the corresponding phosphor sheet). Then, the composite is exposed to X-rays while moving the composite and the X-rays tube, relative to each other, to satisfy the linear law and the geometric law under the condition that a certain section surface of the object is assumed as its center.

After the radiographic operation, the stimulable phosphor sheets are taken out of the composite, and the recorded information is photoelectrically detected from the stimulable phosphor sheets to obtain electric signals. From the obtained electric signals the section images recorded on the sheets are reproduced as visible image.

In the corner of the tomogram obtained as above is recorded an image of the distinguishable mark provided on the end portion of the spacer as a white image. In more detail, an image of the distinguishable mark 5a provided on the spacer 4a is recorded on the tomogram obtained from the stimulable phosphor sheet 3a, and an image of the distinguishable mark 5b provided on the spacer 4b is recorded on the tomogram obtained from the stimulable phosphor sheet 3b. Thus, the obtained images relating to the sections of the object can be distinguished from each other without failure.

As is clear from the above, the multi-layer composite of the present invention is preferably used in a simultaneous tomography employing a plurality of same stimulable phosphor sheets of standerd type which are commonly utilizable in various radiography. However the multi-layer composite of the invention can be also used in conventional tomography using a plurality of stimulable phosphor sheets having phosphor layers of different thickness.

## Claims

1. A multi-layer composite for simultaneous tomography comprising alternating layers of plural stimulable phosphor sheets and plural X-ray transmitting spacers, wherein in the vicinity of the periphery of one surface of each said spacer is provided a distinguishable mark made of X-ray absorbing material which is capable of discriminating the spacers from each other and each said mark is positioned in contact with or close to one of the stimulable phosphor sheets which is to be marked by said mark and adjoins the spacer having the mark.

2. The multi-layer composite as claimed in claim 1, wherein all of said stimulable phosphor sheets are the same as each other.

3. The multi-layer composite as claimed in claim 1, wherein said mark is made of a metal foil or a paint containing a metal powder.

4. The multi-layer composite as claimed in claim 1, wherein said mark is fixed on the spacer with adhesive.

5. The multi-layer composite as claimed in claim 1, wherein said mark is embedded in the spacer.

6. The multi-layer composite as claimed in claim 1, wherein said mark has a thickness in the range of 50 to 100 μm.

7. The multi-layer composite as claimed in claim 1, wherein said mark is arranged in one corner on the surface of the spacer.


**Patentansprüche**

1. Mehrschichtenverbund zur simultanen Tomographie, umfassend wechselnde Schichten aus mehreren stimulierbaren Leuchtstoffbahnen und mehreren für Röntgenstrahlen durchlässige Abstandshalter bzw. Spacer, worin in der Nähe der Peripherie einer Oberfläche jedes Spacers eine unterscheidbare Markierung, hergestellt aus Röntgenstrahlen absorbierendem Material, welche die Spacer voneinander unterscheiden kann, vorgesehen ist, und wobei jede Markierung in Kontakt mit oder nahe zu einer der stimulierbaren Leuchtstoffbahnen, die durch diese Markierung markiert wird, angeordnet ist und zu dem Spacer mit der Markierung benachbart ist.

2. Mehrschichtenverbund nach Anspruch 1, worin alle stimulierbaren Leuchtstoffbahnen gleich sind.

3. Mehrschichtenverbund nach Anspruch 1, worin die Markierung aus einer Metallfolie oder einer Farbe, enthaltend ein Metallpulver, hergestellt ist.

4. Mehrschichtenverbund nach Anspruch 1, worin die Markierung auf dem Spacer mit einem Klebstoff befestigt ist.

5. Mehrschichtenverbund nach Anspruch 1, worin die Markierung in den Spacer eingebettet ist.

6. Mehrschichtenverbund nach Anspruch 1, worin die Markierung eine Dicke im Bereich von 50 bis 100 μm besitzt.

7. Mehrschichtenverbund nach Anspruch 1, worin die Markierung in einer Ecke der Oberfläche des Spacers angeordnet ist.


**Revendications**

1. Un composite à couches multiples pour la tomographie simultanée comprenant des couches alternées d'une pluralité de feuilles de phosphore stimulable et d'une pluralité d'éléments d'écartement transmettant les rayons X, selon lequel dans le voisinage de la périphérie d'une surface de chaque dit élément d'écartement est prévue une marque discernable réalisée en un matériau absorbant les rayons X qui est capable de distinguer les éléments d'écartement les uns des autres et chacune desdites marques est positionnée au contact de ou au voisinage de l'une des feuilles de phosphore stimulable qui doit être marquée par ladite marque et qui avoisine l'élément d'écartement ayant la marque.

2. Le composite à couches multiples selon la revendication 1, selon lequel toutes les feuilles de phosphore stimulable sont identiques les unes aux autres.

3. Le composite à couches multiples selon la revendication 1, selon lequel ladite marque est faite en une feuille métallique ou en une peinture contenant une poudre métallique.

4. Le composite à couches multiples selon la revendication 1, selon lequel ladite marque est fixée sur l'élément d'écartement à l'aide d'un adhésif.

5. Le composite à couches multiples selon la revendication 1, selon lequel ladite marque est encastrée dans l'élément d'écartement.

6. Le composite à couches multiples selon la revendication 1, selon lequel ladite marque a une épaisseur comprise dans l'intervalle de 50 à 100 μm.

7. Le composite à couches multiples selon la revendication 1, selon lequel ladite marque est agencée dans un coin de la surface de l'élément d'écartement.

# FIG. 1

# FIG. 2